# EUROPEAN PATENT APPLICATION

(11) **EP 2 363 932 A1**
(43) Date of publication of application: **07.09.2011**
(21) Application number: 10002055.1
(22) Date of filing: 01.03.2010
(51) Int. Cl.: H02B 11/28

(54) **A switch arrangement for an electrical switchgear**

(71) Applicant: Eaton Industries (Netherlands) B.V., 7559 SC Hengelo (NL)
(72) Inventor: Lammers, Arend, Jan, Willem, 7558 TV Hengelo (NL)
(74) Representative: Tabeling, Marcella M.J.

(57) **Abstract**

A switch arrangement (1) for an electrical switchgear (2) comprises a breaker (4) which is moveable in the switchgear (2) between a first position and a second position. In use, when the breaker (4) is in the first position and closed it electrically connects a bus (8) to a load connection (26), and when the breaker (4) is in the second position and closed it electrically connects the load connection (26) to earth with the bus (8) disconnected from the load connection (26). The breaker (4) moves substantially linearly between the first position and the second position.

## Description

### Field of the Invention

The present invention relates to a switch arrangement for electrical switchgear.

### Background

As is well known, a switchgear is an integrated assembly of switches, buses fuses and other components used to isolate electrical equipment at an electrical installation, for example, an electrical power sub-station. Switchgear is used to both de-energise equipment to allow work to be done and to clear faults downstream of the switchgear. Switchgear is often housed in a metal cabinet at the installation.

In known installations, a distinction is made between so called 'fixed switchgear' and so called 'withdrawable switchgear'. In fixed switchgear the main circuit breaker is fastened within the installation by fasteners, for example bolts, and cannot be removed from the installation without using tools to undo the fasteners. In withdrawable switchgear additional constructional features enable the main circuit breaker to be withdrawn from the installation (and put back in) with a minimum usage of tools or with no usage of tools. Accordingly, in a withdrawable switchgear, the main circuit breaker can be removed quickly for maintenance or replacement or to provide easy access to other components in the installation.

Conventional withdrawable switchgear comprises an earthing switch that is a separate and additional component to the main circuit breaker. The earthing switch is for connecting the switchgear's cable connection (i.e. a connection for a cable that is routed to a load) to earth, while the busbar (e.g. a power supply rail) is disconnected from the cable connection, so that maintenance can be performed. In this type of switchgear, additional space is required to contain the earthing switch and interlocking equipment is required to prevent accidental earthing occurring when the circuit breaker is closed and in the service position (i.e. when the circuit breaker is electrically connecting the live bus bar to the cable connection).

EP 1 965 476 describes a switchgear comprising a combined circuit breaker and disconnector assembly which can be rotated around a pivot axis to any of a contact position, an open position or a ground position. In the contact position the assembly connects a busbar to a cable connection for a load, in the open position the assembly is disconnected from the busbar and in the ground position the assembly connects earth to the cable connection for a load. Accordingly, there is no requirement for a disconnector that is separate to the circuit breaker. However, in this arrangement, space is required to accommodate the pivoting motion of the circuit breaker.

It is desirable to provide an improved breaker assembly for an electrical switchgear and in particular an assembly that allows for a compact, more space efficient switchgear with a low number of components.

### Summary of the Invention

According to the invention, there is provided a switch arrangement for an electrical switchgear, the switch arrangement comprising: a breaker, and wherein, the breaker is moveable in the switchgear between a first position and a second position, such that in use, when the breaker is in the first position and closed it electrically connects a bus to a load connection, and when the breaker is in the second position and closed it electrically connects the load connection to earth with the bus disconnected from the load connection, characterized in that the breaker moves substantially linearly between the first position and the second position.

With such an arrangement there is no need for a separate earthing switch, and because the movement of the breaker is linear rather than rotational the switchgear can be made more compact.

The switch arrangement may further comprise a terminal assembly comprising an electrical contact for the bus and an electrical contact for the load connection, the contacts arranged together along a common axis and wherein the breaker moves along the common axis between the first position and the second position. In this arrangement, when the breaker is in the first position and closed it connects the electrical contact for the bus to the electrical contact for the load connection.

The terminal assembly may further comprise an electrical contact for earth arranged along the common axis. In this arrangement, when the breaker is in the second position and closed it connects the electrical contact for the load connection to the electrical contact for earth.

Arranging the contacts along a common axis in this way enables different electrical connections to be made with a minimum number of contacts.

Some or all of the contacts may be within a hollow terminal housing within which the breaker moves between the first and second positions. This provides for efficient use of space.

### Description of the Drawings

The invention will be described in more detail below, with reference to the accompanying drawings, in which:
Figure 1a is a schematic illustration of a side sectional view of a switch arrangement with a circuit breaker in a first position;
Figure 1b is a schematic illustration of a side sectional view of the switch arrangement with the circuit breaker in a second position;
Figure 1c is a schematic illustration of a sectional view of the switch arrangement with the circuit breaker in a third position;
Figures 2a to 2d are circuit diagrams of the switch arrangement in various switch configurations;
Figure 3a is a side view of the inside of an electrical switchgear comprising a switch arrangement with a circuit breaker shown in a first position;
Figure 3b is a side view of the inside of the electrical switchgear comprising the switch arrangement with the circuit breaker shown in a second position;
Figure 3c is a side view of the inside of the electrical switch gear comprising the switch arrangement with the circuit breaker shown in a third position;
Figure 3d is a perspective view of the inside of the electrical switchgear.

### Detailed Description

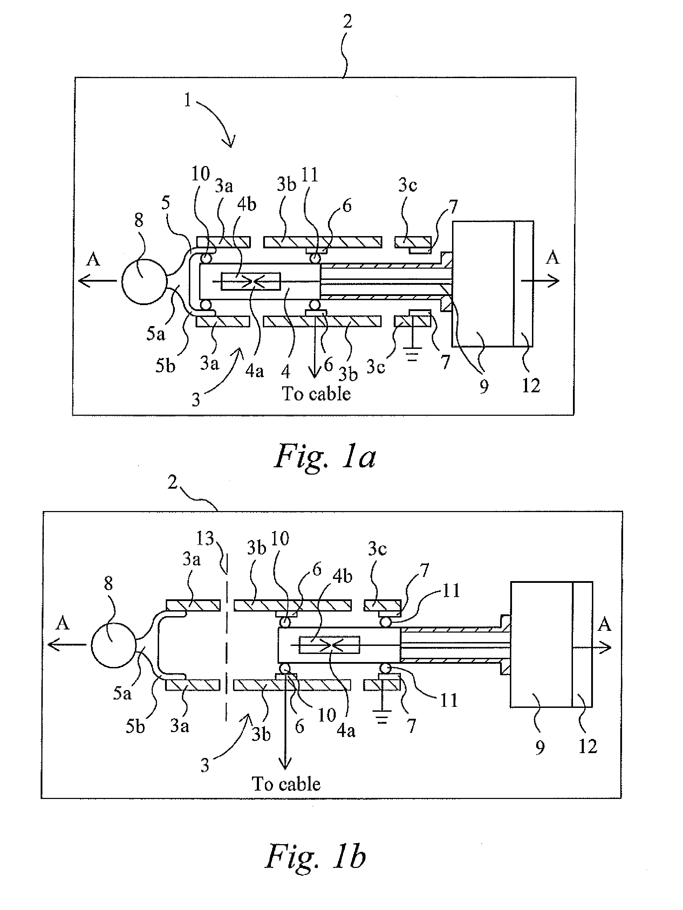

Referring to Figures 1a to 1c, a switch arrangement 1 for an electrical switchgear 2 comprises an electrical pole or terminal 3 and a circuit breaker 4. The terminal 3, is fixed within the switchgear 2 and comprises a housing made up of first 3a, second 3b and third 3c electrically insulating tubular sections of substantially equal diameter which are spaced apart lengthwise along a common axis A. The three tubular sections may for example be formed of an epoxy resin material. Each of the three tubular sections 3a, 3b and 3c has a respective electrical contact 5, 6, 7 located inside of it. The first section 3a has a bus bar contact 5 for making an electrical connection to an electrical bus 8 of the switchgear 2, the second section 3b has a cable contact 6 for making an electrical connection to a cable (not shown) of the switch gear 2 and onwards to a load (not shown) and the third section 3a comprises an earth contact 7 for making an electrical connection to earth. In this example, the conductive contacts 5, 6, 7 are formed of metal, preferably copper, with the cable contact 6 and the earth contact 7 being ring shaped and arranged around the respective inner surfaces of the second 3b and third 3c insulating sections, and the bus bar contact 5 being cup shaped and having a base 5a connected to the bus-bar 8 and a side 5b arranged around the inner surface of the first insulating section 3a.

The circuit breaker 4, which may be a vacuum interrupter, is preferably generally cylindrical in shape, and is arranged lengthwise along the axis A and is moveable in and out of the inside of the terminal 3. If the breaker 4 is a vacuum interrupter, as is standard with such devices, it comprises two internal electrical contacts 4a, enclosed in a vacuum chamber 4b, one fixed and the other moveable and a breaker actuator assembly 9 for moving the moveable contact away from the fixed contact to open (i.e. trip) the breaker 4 in the event of a fault (e.g. an over current) being detected.

In this embodiment, the circuit breaker 4 further comprises at its respective ends, first 10 and second 11 external electrical contacts, each of which is preferably a ring shaped metal (e.g. copper) coil located in a respective annular groove (not shown) that extends around an external diameter of the breaker 4, although different arrangements of contacts are also possible, for example, pad shaped contacts.

The switch arrangement 1 further comprises a powered drive mechanism 12 for causing linear movement of the circuit breaker 4, in the terminal 3, between a first position illustrated in Figure 1a and a second position shown in Figure 1b.

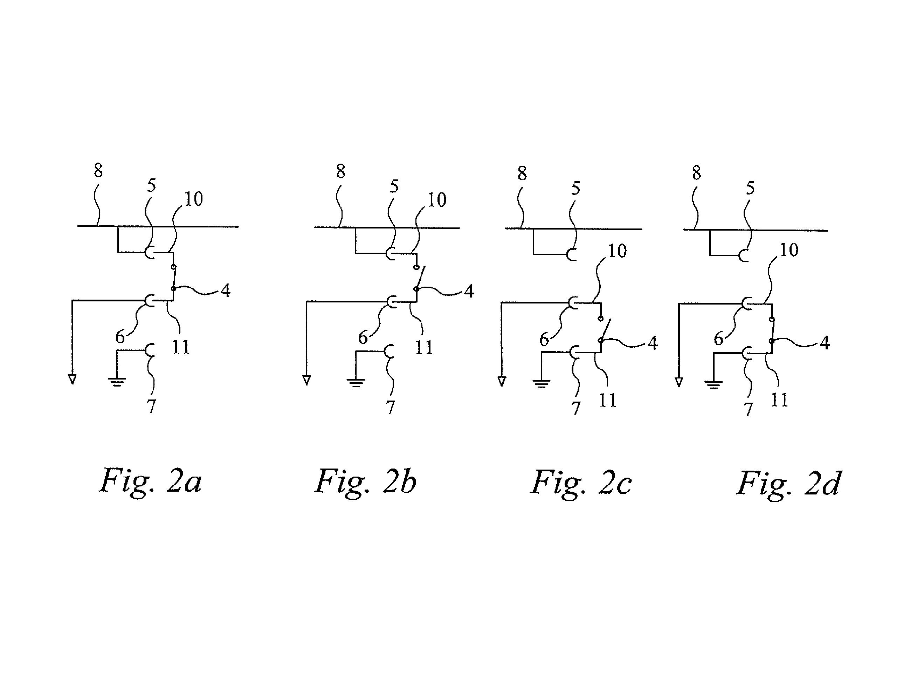

In the first position, the first contact 10 slideably engages the bus-bar contact 5 and the second contact 11 slideably engages the cable contact 6. Accordingly, as illustrated in the circuit diagram of Figure 2a, when the circuit breaker 4 is in the first position and is closed (i.e. the internal contacts 4a are closed) the bus-bar 8 is electrically connected via the breaker 4 to the cable contact 6 so that the switch gear arrangement 1 can supply power to a load (not shown). As illustrated in Figure 2b, when the circuit breaker 4 is in the first position but it is open (i.e. the internal contacts 4a are open) the bus-bar 8 is electrically disconnected by the breaker 4 from the cable contact 6 and the switch gear arrangement 1 cannot supply power to the load (not shown).

In the second position, the first contact 10 slideably engages the cable contact 6 and the second contact 11 slideable engages the earth contact 7. Accordingly, as illustrated in the circuit diagram of Figure 2c, when the circuit breaker 4 is in the second position and is open, the cable contact 6 is electrically disconnected from the bus-bar 8 and from the earth contact 7. As illustrated in Figure 2d, when the circuit breaker 4 is in the second position but is closed, the cable contact 6 is electrically disconnected from the bus-bar 8, but is electrically connected to earth via the circuit breaker 4. In one or other of these configurations of the second position, maintenance or testing of components can be performed.

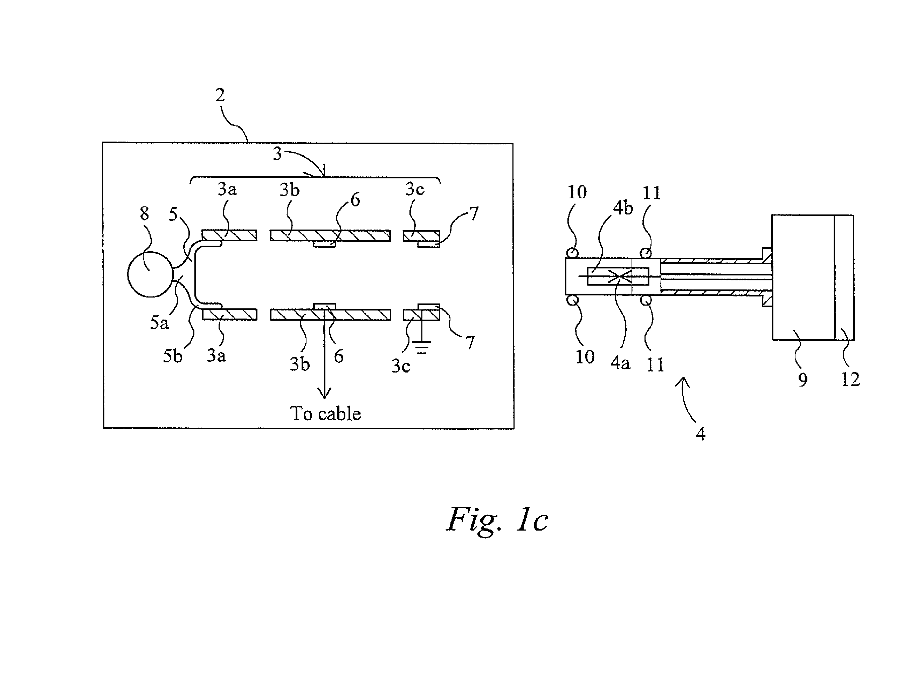

Figure 1c illustrates the circuit breaker 4 in a third position in which it is withdrawn from the switch gear arrangement 1. The circuit breaker 4 may be driven between this position and the second position along the axis A by the drive mechanism 12. Alternatively, the circuit breaker 4 and the drive mechanism 12 may be constructed as an integrated unit, which a human operator can manipulate manually between the second and third positions or can be power driven between the second and third positions.

Optionally, a shutter 13 is provided, which can be drawn into the position shown in Figure 1b, as a physical barrier between the bus bar contact 5 and the breaker 4, so that tests can be performed on the breaker.

The housing may be transparent to allow for easy visible inspection of components.

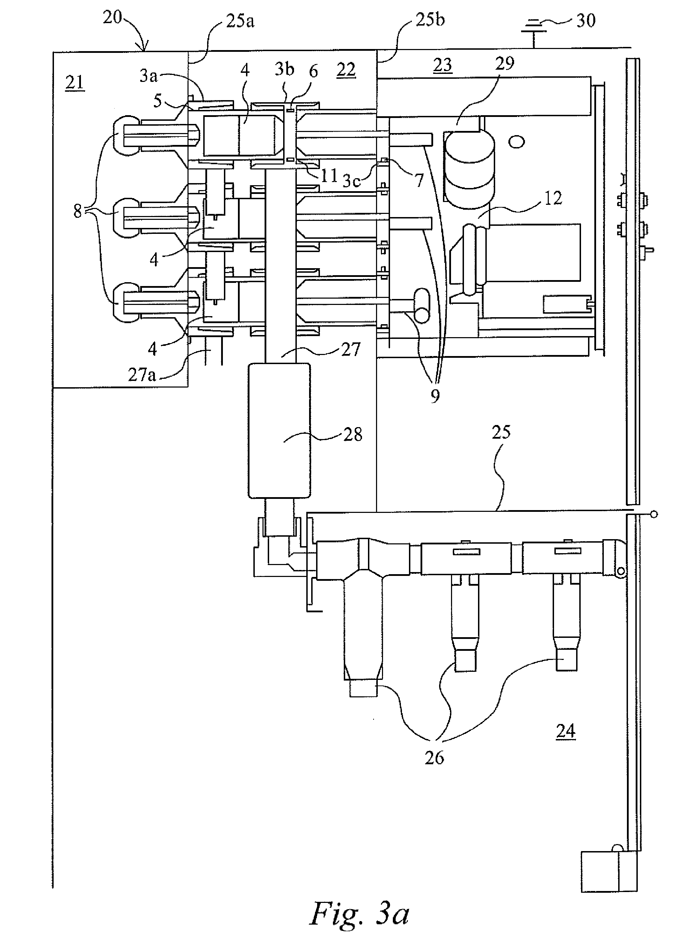

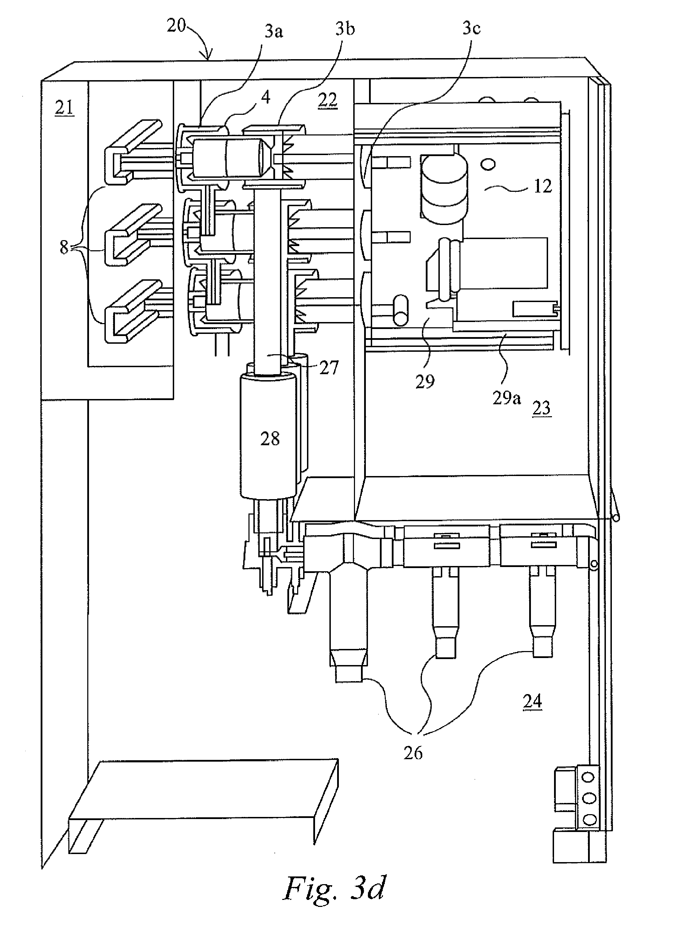

Figures 3a to 3c illustrate a side view of the inside of a cabinet 20, housing a medium voltage electrical switchgear 2 embodying the present invention. Figure 3d illustrates a perspective view of the inside of the cabinet 20. Features the same as those already described with respect to Figures 1a to 1c are given the same reference numerals in Figures 3a to 3d as they are in Figures 1a to 1c.

The cabinet 20 is divided by internal partitions 25 into a plurality of compartments 21 to 24 containing the internal components of the switchgear 2. The switchgear 2 is a three-phase system and so comprises three conductive busbars 8 in an upper rearward section 21.

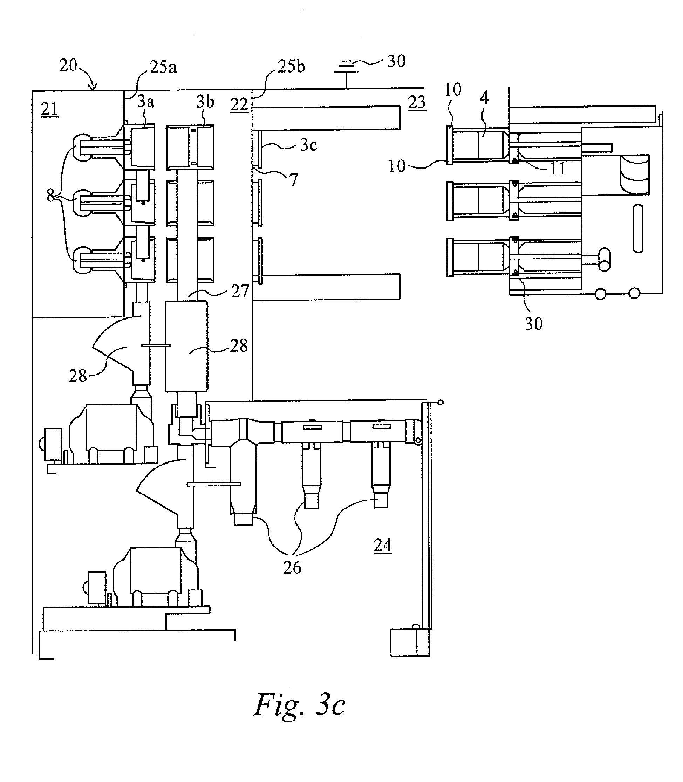

Each busbar 8 is provided with a terminal 3, of the type illustrated in Figures 2a to 2c, which extends from the upper rearward compartment 21, across an upper middle compartment 22, to an upper forward compartment 23. A circuit breaker 4, also of the type illustrated in Figures 2a to 2c, is associated with each terminal 3. As shown in the Figures, each terminal's 3 first tubular section 3a is partly in the upper rearward compartment 21 and partly in the upper middle compartment 22 and extends through the partition 25a which divides these two compartments; each terminal's 3 second tubular section 3b is supported in the upper middle compartment 22; and each terminal's 3 third tubular section 3c is in the upper forward section 23 and defines an aperture (best seen in Figure 3c) through the partition 25b separating the upper forward section 23 and the upper middle section 22.

A bottom compartment 24 contains three groups of three cable terminations 26 (only one group of the three is visible in Figures 3a to 3c) which are connectable to cables (not shown) routed to a load (not shown). Each group of three cable terminations 26 is connected to a respective one of three conductors 27, which is routed to a cable contact 6 of a respective one of the terminals 3. Each conductor 27 may be fitted with measuring equipment 28, for example, a current transformer, voltage transformer or other such device.

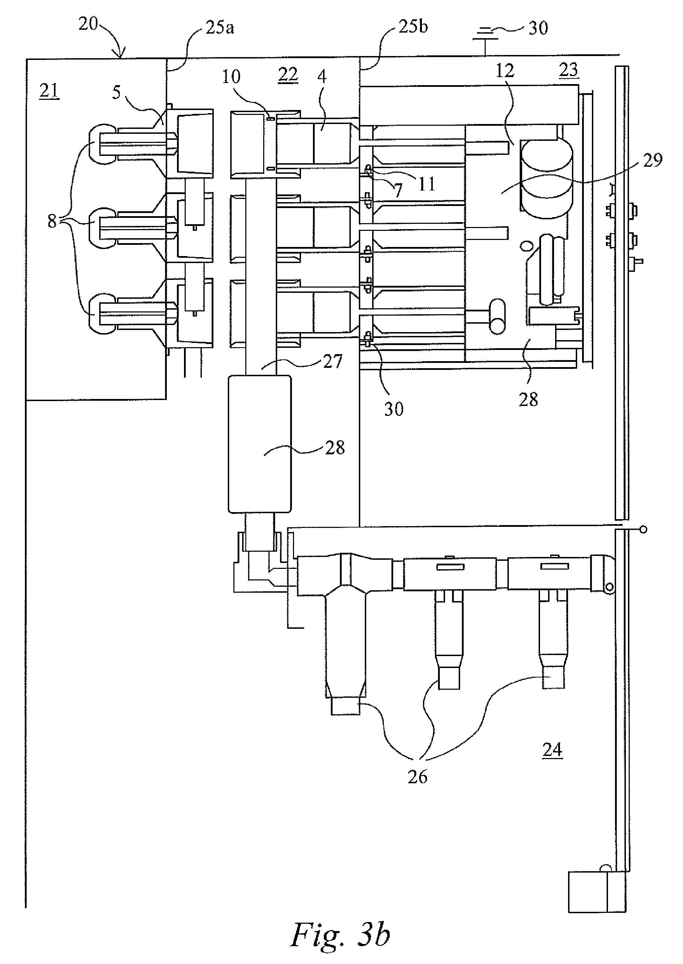

A drive means 12 for driving each circuit breaker 4 between the first position illustrated in Figure 3a (and Figure 1a) and the second position illustrated in Figure 3b (and Figure 2b) is contained in the upper forward compartment 23. In this embodiment, the drive means 12 comprises a power driven carrier unit 29 mounted on a rail system 29a (see Figure 3d) which supports the breakers 4, and is driven back and forth on the rail system to move the breakers 4, in unison, between the first and second positions. As explained above, the movement of the breakers 4 is substantially linear.

In the first position, each bus bar 8 is connected to a respective one of the three groups of cable termination 26 via a bus bar contact 5, a breaker 4, a cable contact 6 and a conductor 27. In the second position, each group of three cable termination 26 is connected to an earth connection via a respective conductor 27, a respective cable contact 6, a respective breaker 4, and a respective earth contact 7. The earth contact 7 is connected to the earth connection 30 via partition 25b and the metal cabinet 20.

Figure 3c illustrates the third position in which the breakers 4 are withdrawn from the switch gear assembly. In this embodiment, the breakers 4 and the drive means 12 form an integrated unit which is easily removeable from the switchgear 2.

As is best seen in Figure 3d, the terminals 3 are arranged within the cabinet 20 in parallel, and diagonally relative to the sides of the cabinet, with the breakers 4 correspondingly arranged. This provides for a more compact arrangement than could be achieved by arranging the terminals 3 and breakers 4 in parallel, and horizontally or vertically.

The embodiments of the present invention described above provide for a space efficient switchgear in which a breaker can quickly and easily be moved between a first position in which the breaker connects a bus bar to a load and a second position in which the breaker connects the load to earth. The breaker may also easily be moved to a third position in which it is withdrawn from the switchgear. Furthermore, with the described arrangement, current paths are relatively short and so less power is lost as heat. Additionally, no interlocking is required as is the case with arrangements comprising earth switches that are separate from the breaker.

Many modifications or variations may be made to the described embodiments. For example, although the described terminal housing is in three distinct separate sections, it may instead be a single unitary housing with the contacts 5, 6, 7 being spaced apart along its length and electrically isolated from each other. Alternatively, the housing may comprise two distinct sections with one of the contacts, say the bus bar contact 5, in one section, and the other two contacts in the other section.

Although the drive means is described as being powered it may be manually operated.

The general shape of the housing and of the breaker may of course vary from that described above

## Claims

1. A switch arrangement (1) for an electrical switchgear (2), the switch arrangement (1) comprising:
a breaker (4);
wherein, the breaker (4) is moveable in the switchgear (2) between a first position and a second position, such that in use, when the breaker (4) is in the first position and closed it electrically connects a bus (8) to a load connection (26), and when the breaker (4) is in the second position and closed it electrically connects the load connection (26) to earth with the bus (8) disconnected from the load connection (26); **characterized in that** the breaker (4) moves substantially linearly between the first position and the second position.

2. A switch arrangement (1) according to claim 1, further comprising:
a terminal assembly (3) comprising an electrical contact (5) for the bus (8) and an electrical contact (6) for the load connection (26), the contacts (5,6) spaced apart along an axial direction and wherein the breaker (4) moves along the common axis between the first position and the second position; wherein, when the breaker (4) is in the first position and closed it connects the electrical contact (5) for the bus to the electrical contact (6) for the load connection (26).

3. A switch arrangement (1) according to claim 2, wherein, the terminal assembly (3) further comprises an electrical contact (7) for earth arranged along the common axis and wherein, when the breaker (4) is in the second position and closed it connects the electrical contact (6) for the load connection (26) to the electrical contact (7) for earth.

4. A switch arrangement (1) according to claim 2, wherein the terminal assembly (3) further comprises a housing arrangement (3a, 3b, 3c) containing the electrical contact (5) for the bus (8) and the electrical contact (6) for the load connection (26) and wherein the breaker (4) moves within the housing arrangement (3a, 3b, 3c) to and from the first position.

5. A switch arrangement (1) according to claim 3, wherein, the terminal assembly (3) further comprises a housing arrangement (3a, 3b, 3c) containing the electrical contact for the bus (5), the electrical contact (6) for the load connection (26), and the electrical contact (7) for earth and wherein the breaker moves within the housing arrangement (3a, 3b, 3c) between the first position and the second position.

6. A switch arrangement (1) according to claim 4 or claim 5, wherein, the housing arrangement (3a, 3b, 3c) comprises a hollow electrically insulating member arranged along the axial direction and the electrical contacts comprise electrically conductive regions in the member.

7. A switch arrangement (1) according to claim 6, wherein, the member is split into a plurality of separate sections along the axial direction, and wherein at least one of the electrical contacts is in one of the sections and at least another of the electrical contacts is in another of the sections.

8. A switch arrangement according to any of claims 2 to 7, wherein the breaker comprises a first electrical contact (10) and a second electrical contact (11), in the first position the first contact (10) engaging the electrical contact (5) for the bus (8) and the second contact (11) engaging the electrical contact (6) for the load connection (26).

9. A switch arrangement (1) according to claim 8 when dependent upon claim 3, wherein, in the second position, the first contact (10) engages the electrical contact (6) for the load connection (26) and the second contact (11) engages the electrical contact (7) for earth.

10. A switch arrangement (1) according to any preceding claim, further comprising a drive means for driving the breaker between the first position and the second position.

11. A switch arrangement according to any preceding claim wherein the breaker (4) is separable from the terminal assembly (3).

12. Electrical switchgear comprising a switch arrangement according to any preceding claim.

13. Electrical switchgear according to claim 12, comprising a multi phase system, and for each phase a switch arrangement according to any of claims 1 to 11.

14. Electrical switchgear according to claim 13, wherein the switch arrangements are arranged substantially in parallel, and diagonally in the switchgear.

15. A method of operating the switch arrangement of any of claims 1 to 11, the method comprising moving the breaker substantially linearly between the first position and the second position.
